# EUROPEAN PATENT APPLICATION

(11) **EP 4 679 671 A1**
(43) Date of publication of application: **14.01.2026**
(21) Application number: 24770598.1
(22) Date of filing: 04.03.2024
(51) Int. Cl.: H02J 7/04, H01M 10/44, H01M 10/48, H02J 7/00

(54) **CHARGING CONTROL DEVICE, CHARGING CONTROL METHOD, AND CHARGING CONTROL PROGRAM**

(30) Priority: 10.03.2023 JP 2023037834
(71) Applicant: KRI, Inc., Kyoto-shi, Kyoto 600-8813 (JP); Osaka Gas Co., Ltd., Osaka-shi, Osaka 541-0046 (JP)
(72) Inventor: HAYANO, Akihito, Kyoto-shi, Kyoto 600-8813 (JP); MIZOGUCHI, Yasunori, Kyoto-shi, Kyoto 600-8813 (JP); KINOSHITA, Hajime, Kyoto-shi, Kyoto 600-8813 (JP)
(74) Representative: LBP Lemcke, Brommer & Partner Patentanwälte mbB
(86) International application number: PCT/JP2024/008024
(87) International publication number: WO 2024/190487

(57) **Abstract**

An object is to easily suppress the degradation of battery performance during charging. A charging control apparatus controls charging of a secondary battery 1 that is performed by supplying power from a power source 3, and includes: a control unit 18 configured to control power supplied from the power source 3; and a resistance acquisition unit 17 configured to obtain an internal resistance 5 of the secondary battery 1. The power source 3 can change a charging current 6 and supply power to the secondary battery 1. The control unit 18 performs suppression control on the power source 3 such that the product of the charging current 6 and the internal resistance 5 is smaller than or equal to a predetermined threshold 8.

## Description

### Technical Field

The present invention relates to a charging control apparatus, a charging control method, and a charging control program for controlling charging of a secondary battery.

### Background Art

Performance of secondary batteries may degrade during charging due to various factors. Thus, charging control is performed using various methods. For example, in lithium-ion batteries, lithium (Li) may precipitate from its negative electrode during low-temperature charging, resulting in reduced battery performance. In order to suppress such a phenomenon, the invention disclosed in Patent Document 1 obtains a potential at the negative electrode and adjusts allowable input power such that the potential does not drop to a lithium reference potential.

### Prior Art Documents

### Patent Documents

Patent Document 1 WO 2010/5079

### Disclosure of the Invention

### Problem to be Solved by the Invention

However, it is not easy to accurately obtain the potential at the negative electrode and suppress the degradation of battery performance.

An object of the present invention is to easily suppress the degradation of battery performance during charging.

### Means for Solving Problem

To achieve the above object, a characteristic configuration of a charging control apparatus according to an embodiment of the present invention lies in a charging control apparatus configured to control charging of a secondary battery that is performed by supplying power from a power source, the charging control apparatus including: a control unit configured to control the power supplied from the power source; and a resistance acquisition unit configured to obtain an internal resistance of the secondary battery, wherein the power source is capable of changing a charging current and supplying the power to the secondary battery, and the control unit is configured to perform suppression control on the power source such that a product of the charging current and the internal resistance is smaller than or equal to a predetermined threshold.

A characteristic configuration of a charging control method according to an embodiment of the present invention lies in a charging control method for controlling charging of a secondary battery that is performed by supplying power from a power source, the charging control method including: a step of obtaining an internal resistance of the secondary battery; and a step of performing suppression control on the power source such that a product of a charging current of the power and the internal resistance is smaller than or equal to a predetermined threshold.

A characteristic configuration of a charging control program according to an embodiment of the present invention lies in a charging control program for controlling charging of a secondary battery that is performed by supplying power from a power source, the charging control program causing a computer to execute: a function of obtaining an internal resistance of the secondary battery; and a function of performing suppression control on the power source such that a product of a charging current of the power and the internal resistance is smaller than or equal to a predetermined threshold.

The product of the charging current and the internal resistance is a measure of the influence on the degradation of battery performance. Therefore, the above configurations allow charging control to be performed using the product of the charging current and the internal resistance, which is a measure of battery performance degradation, and allow battery performance degradation during charging to be suppressed easily.

The threshold may be set while considering an allowable overvoltage during charging of the secondary battery.

As a result of intensive studies, the inventors found that the relationship of overvoltage to the product of the charging current and the internal resistance affects the degradation of battery performance. According to this configuration, the threshold can be set based on the overvoltage while considering that relationship, and the degradation of battery performance during charging can be suppressed easily.

The secondary battery may be repeatedly charged and discharged while experimentally varying the product of the charging current and the internal resistance, a decrease rate of a charging efficiency or of a full charge capacity may be measured each time the secondary battery is charged and discharged, and the product of the charging current and the internal resistance at a time when the decrease rate of the charging efficiency or of the full charge capacity becomes smaller than a predetermined value may be determined as the threshold.

This configuration allows the threshold to be generated accurately and allows the degradation of battery performance during charging to be suppressed easily and accurately.

The charging control apparatus may further include a temperature control unit configured to control a temperature of the secondary battery during charging, wherein the control unit may be configured to control the internal resistance by controlling the temperature of the secondary battery with use of the temperature control unit such that the product of the charging current and the internal resistance is smaller than or equal to the threshold in the suppression control.

The internal resistance depends on the temperature of the secondary battery. This allows the internal resistance to be varied by changing the temperature of the secondary battery. According to this configuration, the product of the charging current and the internal resistance can be easily controlled by changing the temperature of the secondary battery, allowing the degradation of battery performance during charging to be easily suppressed.

The charging control apparatus may further include: a storage unit configured to store an initial full charge capacity of the secondary battery; and a capacity retention rate acquisition unit configured to obtain a capacity retention rate of the secondary battery from the initial full charge capacity, wherein the control unit is configured to perform the suppression control such that the product of the charging current and the internal resistance is smaller than or equal to a product of the threshold and the capacity retention rate.

It can be estimated that a situation where the full charge capacity decreases is a situation where the degradation of the secondary battery is progressing. This configuration allows the threshold to be corrected in correspondence with the capacity retention rate indicating a decrease in the full charge capacity, and allows the degradation of battery performance during charging to be suppressed more easily and accurately.

The charging control apparatus may further include a voltage measurement unit configured to measure a charging voltage during charging, wherein the control unit may be configured to perform the suppression control while the charging voltage is higher than or equal to a predetermined upper limit voltage.

The suppression control may be performed at all times during charging, but the influence of the suppression control is small while the charging voltage is low. According to this configuration, the suppression control is performed only while the charging voltage is higher than or equal to the predetermined upper limit voltage, at which time the influence of the suppression control increases, so that the degradation of battery performance during charging can be suppressed efficiently.

The charging control apparatus may further include a voltage measurement unit configured to measure a charging voltage during charging, wherein the threshold may include thresholds set to be different for each of a plurality of charging voltage bands, and the control unit may be configured to perform the suppression control for each of the charging voltage bands with use of the threshold corresponding thereto.

The influence of battery degradation on the product of the charging current and the internal resistance increases as the charging voltage increases. It is therefore useful to vary the threshold in accordance with the charging voltage. According to this configuration, the charging voltage during charging is divided into a plurality of charging voltage bands, and different thresholds can be set for each of the charging voltage bands, allowing the degradation of battery performance during charging to be suppressed more accurately.

### Brief Description of the Drawing

FIG. 1 illustrates an example of a configuration of a charging control apparatus.
FIG. 2 shows an example of the flow of charging control.
FIG. 3 shows an example of a method of setting a threshold.
FIG. 4 illustrates the effect of suppressing degradation resulting from charging control.
FIG. 5 illustrates the charging control performed in an entire charging period.
FIG. 6 illustrates the charging control performed in a charging voltage band.
FIG. 7 illustrates the charging control performed in a plurality of charging voltage bands.

### Best Mode for Carrying out the Invention

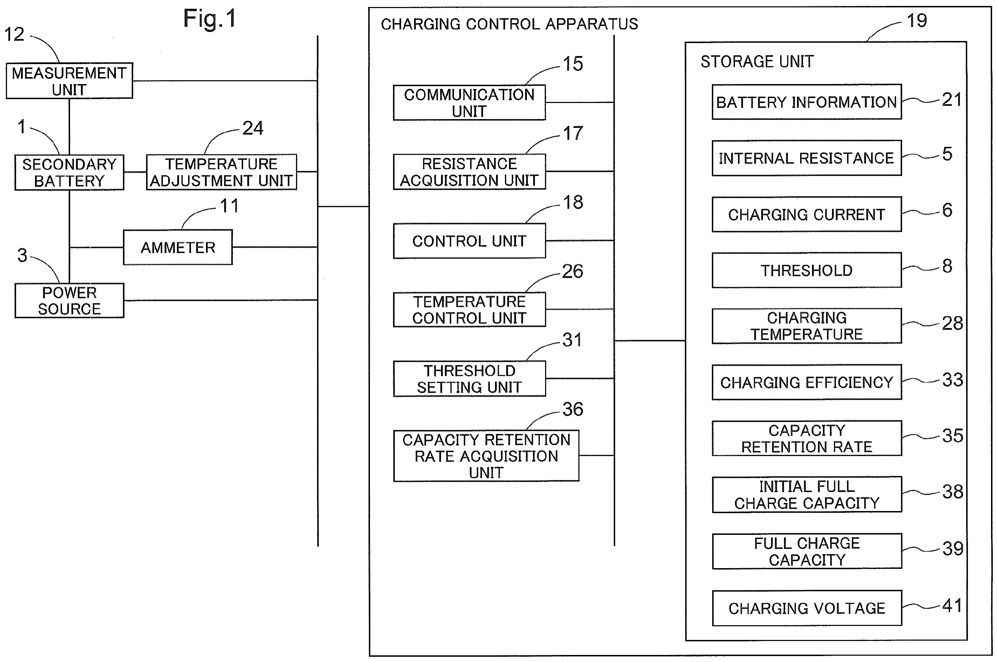

As shown in FIG. 1, a secondary battery 1, such as a lithium ion battery, is charged by receiving power supplied from a power source 3. A battery voltage during charging (CCV: Closed Circuit Voltage) is represented by the sum of a terminal voltage when the secondary battery 1 is not connected (OCV: Open Circuit Voltage) and a charging current 6 × an internal resistance 5. An excessively large product (IR) of the charging current 6 and the internal resistance 5 causes an overvoltage state of the secondary battery 1 during charging. Thus, the product (IR) of the charging current 6 and the internal resistance 5 is an index of one factor for a decrease (degradation) of the performance of the secondary battery 1.

From this, the inventors found that the degradation of the secondary battery 1 can be suppressed by charging the secondary battery 1 while controlling the product (IR) of the charging current 6 and the internal resistance 5 based on the voltage corresponding to the overvoltage. Furthermore, the inventors experimentally found a voltage value corresponding to the overvoltage for controlling the product (IR) of the charging current 6 and the internal resistance 5.

A charging control apparatus in the present embodiment controls the power source 3 during charging (i.e., performs suppression control on the power source 3) to suppress power related to charging so that the product (IR) of the charging current 6 and the internal resistance 5 is smaller than or equal to a predetermined threshold 8. The threshold 8 in this case is set while considering an allowable overvoltage during charging of the secondary battery 1, as will be described later.

It is possible to appropriately charge the secondary battery 1 and easily suppress the degradation of the secondary battery 1 by thus controlling the charging (i.e., performing the suppression control on the power source 3) using the threshold 8 in which the overvoltage, which is a factor of the degradation, is considered. The suppression control is performed for the charging such that the product (IR) of the charging current 6 and the internal resistance 5 is smaller than or equal to the threshold 8, thereby making it possible to perform the suppression control for charging only by controlling at least either the charging current 6 or the internal resistance 5. Thus, the degradation of the secondary battery 1 can be easily suppressed while easily performing the suppression control for charging.

### [Charging control apparatus]

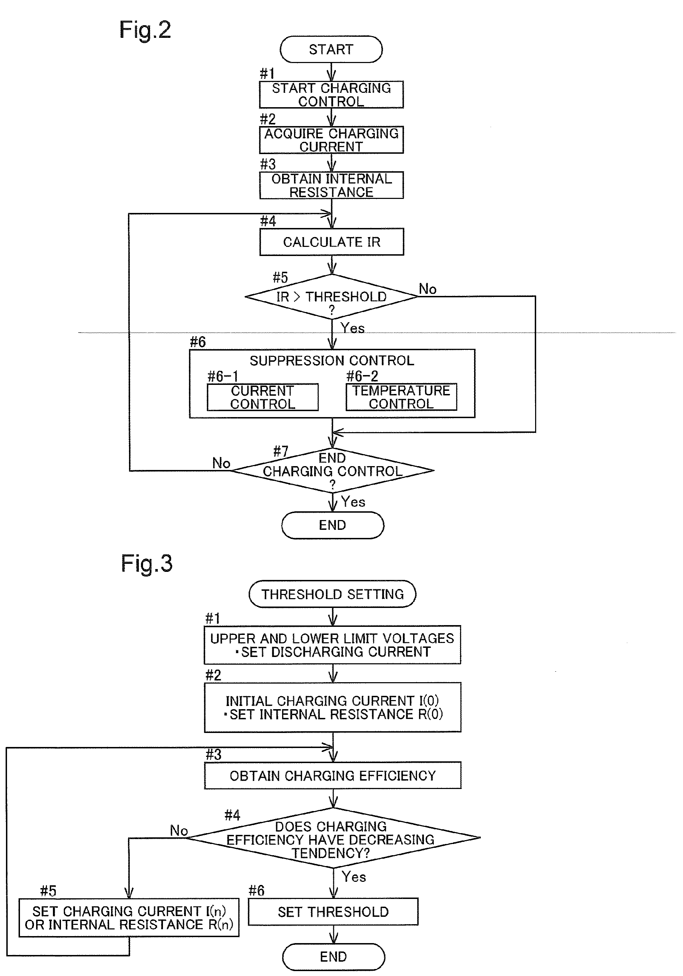

An example of a configuration for the suppression control and an example of a configuration of the charging control apparatus will be described below with reference to FIGS. 1 and 2.

The secondary battery 1 is charged by receiving power supplied from the power source 3, as mentioned above. Here, an ammeter 11 that measures the charging current 6 of the power for the charging is provided in a power supply path. A measurement unit 12, which measures various types of information, such as internal current and voltage, is connected to the secondary battery 1.

The charging control apparatus that controls the charging while performing the suppression control during charging includes a communication unit 15, a resistance acquisition unit 17, a control unit 18, and a storage unit 19. The charging control apparatus includes a processor such as a CPU, and each functional block of the charging control apparatus is controlled by the processor. The charging control apparatus starts charging control including the suppression control in response to the start of charging of the secondary battery 1 (step #1 in FIG. 2).

The communication unit 15 acquires information from the outside. For example, the communication unit 15 acquires the charging current 6 from the ammeter 11 over time and stores each charging current 6 in the storage unit 19 in association with the acquisition time (step #2 in FIG. 2). The communication unit 15 also acquires information on the current, voltage, and the like of the secondary battery 1 measured by the measurement unit 12 over time, and stores each piece of battery information 21 in the storage unit 19 as battery information 21 associated with the acquisition time.

The resistance acquisition unit 17 obtains the internal resistance 5 of the secondary battery 1 during charging over time, based on the battery information 21 stored in the storage unit 19 (step #3 in FIG. 2). The resistance acquisition unit 17 stores the obtained internal resistance 5 in the storage unit 19 in association with the time at which the battery information 21 was acquired.

The resistance acquisition unit 17 may obtain the internal resistance 5 using any method. For example, the resistance acquisition unit 17 may calculate the internal resistance 5 from the current and voltage of the secondary battery 1 acquired as the battery information 21. Also, a table in which the relationship between any type of battery information 21 and the internal resistance 5 is specified may be prepared in advance, and the resistance acquisition unit 17 may obtain the internal resistance 5 based on the table in accordance with the battery information 21. Also, the measurement unit 12 may directly measure the internal resistance 5 of the secondary battery 1, and the resistance acquisition unit 17 may acquire the internal resistance 5 measured by the measurement unit 12 over time via the communication unit 15.

The control unit 18 controls power supplied from the power source 3 to the secondary battery 1. Specifically, the control unit 18 performs suppression control to control power supplied from the power source 3 during charging, based on the charging current 6, the internal resistance 5, and the threshold 8.

Specifically, first, the control unit 18 obtains the charging current 6 and the internal resistance 5 stored in the storage unit 19, and calculates the product (IR) of the charging current 6 and the internal resistance 5 at a certain time during charging (step #4 in FIG. 2).

Next, the control unit 18 acquires the threshold 8 stored in advance in the storage unit 19, and determines whether or not the product (IR) of the charging current 6 and the internal resistance 5 is greater than the threshold 8 (step #5 in FIG. 2).

If IR is greater than the threshold 8 (step #5: Yes in FIG. 2), the control unit 18 performs the suppression control (step #6 in FIG. 2). The suppression control is a control for suppressing at least either the charging current 6 or the internal resistance 5 so that IR is smaller than or equal to the threshold 8.

If IR is smaller than or equal to the threshold 8 (step #5: No in FIG. 2) or if the suppression control is performed (step #6 in FIG. 2), the control unit 18 determines whether or not charging (charging control) has ended (step #7 in FIG. 2). If charging has ended (step #7: Yes in FIG. 2), the processing ends. If charging has not ended (step #7: No in FIG. 2), processing returns to the calculation of IR at the next predetermined time (step #4 in FIG. 2), and charging continues.

As described above, the value of the product (IR) of the charging current 6 and the internal resistance 5 of the secondary battery 1 during charging is controlled using the threshold 8 in which the allowable overvoltage during charging of the secondary battery 1 is considered. This can directly control IR that is dominant with respect to the battery voltage (CCV) during charging such that the acceptable overvoltage is not exceeded. As a result, it is possible to easily suppression control for charging and suppress the degradation of the secondary battery 1.

### [Suppression control]

Next, a specific example of a configuration of the suppression control will be described with reference to FIGS. 1 and 2. The suppression control is a control for suppressing at least either the charging current 6 or the internal resistance 5, as mentioned above.

When controlling the charging current 6, the control unit 18 controls the power source 3 such that the value of the product (IR) of the charging current 6 and the internal resistance 5 is smaller than or equal to the threshold 8, i.e., charging current 6 ≤ threshold 8 / internal resistance 5 (step #6-1 in FIG. 2).

In the case of controlling the internal resistance 5, the internal resistance 5 may be controlled using any method. For example, the internal resistance 5 of the secondary battery 1 depends on the temperature of the secondary battery 1. Therefore, the control unit 18 may control (suppress) the internal resistance 5 by controlling the temperature (charging temperature 28) of the secondary battery 1 during charging, and perform charging control (step #6-2 in FIG. 2).

The secondary battery 1 has a temperature adjustment unit 24 in order to control the internal resistance 5 by controlling the temperature of the secondary battery 1. The temperature adjustment unit 24 controls the temperature (charging temperature 28) of the secondary battery 1. Further, the charging control apparatus also includes a temperature control unit 26. The measurement unit 12 continuously measures the temperature of the secondary battery 1 during charging as the battery information 21, and the communication unit 15 acquires the temperature of the secondary battery 1 measured by the measurement unit 12 and stores it in the storage unit 19 as the charging temperature 28.

When controlling the internal resistance 5 in this configuration, the control unit 18 controls (varies) the charging temperature 28 such that the value of the product (IR) of the charging current 6 and the internal resistance 5 is smaller than or equal to the threshold 8, i.e., internal resistance 5 ≤ threshold 8/charging current 6. Specifically, the control unit 18 controls the temperature adjustment unit 24 via the temperature control unit 26 to increase the charging temperature 28 of the secondary battery 1 so as to reduce the internal resistance 5. The charging temperature 28 is controlled using any method. For example, in response to IR exceeding the threshold 8, the control unit 18 (temperature control unit 26) may increase the charging temperature 28 by a predetermined temperature or by a predetermined proportion relative to the current charging temperature 28. Alternatively, a table or the like indicating the relationship between the internal resistance 5 and the charging temperature 28 may be prepared in advance, and the control unit 18 (temperature control unit 26) may control the secondary battery 1 so as to achieve the charging temperature 28 corresponding to the internal resistance 5 with which IR is smaller than or equal to the threshold 8.

### [Threshold]

Next, an example of a configuration for setting (determining) the threshold 8 will be described with reference to FIGS. 1 and 3. Note that the threshold 8 is not limited to being set using the following method, and may be set using any method.

In the case of setting the threshold 8 in the charging control apparatus, the charging control apparatus includes a threshold setting unit 31. The threshold setting unit 31 determines (sets) the threshold 8 by checking a decreasing trend of battery performance of the secondary battery 1 while repeating charging and discharging by changing charging power conditions such as IR and discharging conditions. Note that the threshold 8 is normally set for the secondary battery 1 in an unused state.

Specifically, first, the threshold setting unit 31 receives an input of settings of charging and discharging conditions, which include upper and lower limit voltages for charging and discharging, and a discharging current (step #1 in FIG. 3). The threshold setting unit 31 repeats charging and discharging under these charging and discharging conditions, which are not changed.

Next, the threshold setting unit 31 sets the initial charging current 6 and internal resistance 5 (the product of the charging current 6 and the internal resistance 5) during charging as IR conditions (step #2 in FIG. 3). Here, the threshold setting unit 31 sets, as the IR conditions in the case where n = 0, the initial charging current 6 to a charging current I(0) and the initial internal resistance 5 to an internal resistance R(0). Then, the secondary battery 1 is repeatedly charged and discharged a predetermined number of times under these charging and discharging conditions and IR conditions. The predetermined number of times is a predetermined number of times that is once or more.

Next, each time charging and discharging are performed, the threshold setting unit 31 obtains a charging efficiency 33 based on the battery information 21 measured by the measurement unit 12 and stored in the storage unit 19, and stores the obtained charging efficiency 33 in the storage unit 19 (step #3 in FIG. 3). Here, the threshold setting unit 31 can obtain, as the charging efficiency 33, one or more indices that are indicated by AH efficiency, which is a difference (ratio) between the amount of charged electricity and the amount of discharged electricity, a difference (ratio) between a charge capacity and a discharge capacity, or the like.

Next, the threshold setting unit 31 determines whether the charging efficiency 33 has a decreasing tendency that is greater than or equal to a predetermined level, i.e., whether or not the charging efficiency 33 has decreased by a predetermined value or at a predetermined rate (decrease rate; first reference value) or more (step #4 in FIG. 3).

Next, if the charging efficiency 33 does not have a decreasing tendency (step #4: No in FIG. 3), the threshold setting unit 31 changes the IR conditions, repeats charging and discharging again, and repeats the step of determining the charging efficiency 33 (step #3 in FIG. 3) and the following steps (step #5 in FIG. 3). Specifically, the threshold setting unit 31 increases the value of at least either the charging current 6 or the internal resistance 5. That is, the threshold setting unit 31 increments n by 1 and sets the charging current I(n) and the internal resistance R(n) such that I(n) × R(n) > I(n-1) × R(n-1). If, for example, charging and discharging are performed under the initial IR conditions and the charging efficiency 33 does not have a decreasing tendency, the threshold setting unit 31 sets the charging current I1 and the internal resistance R1 such that I1 × R1 > I0 × R0.

Note that either the charging current I(n) or the internal resistance R(n) may be increased from the charging current I(n-1) or the internal resistance R(n-1), or both the charging current I(n) and the internal resistance R(n) may be increased from the charging current I(n-1) and the internal resistance R(n-1). The product of the charging current 6 and the internal resistance 5 need only be increased. In the case where only one of them is increased, it is preferable that the threshold setting unit 31 increases the charging current 6 and internal resistance 5 alternately or otherwise distribute the increase as appropriate each time the IR conditions are changed in order to prevent only one of them from increasing unevenly.
The value of increase may be constant at all times, but the increase may be gradually reduced or changed in accordance with the degree of decrease in the charging efficiency 33. For example, the threshold setting unit 31 may initially increase at least either the charging current 6 or the internal resistance 5 at a fixed rate (value) and when the charging efficiency 33 decreases by a predetermined rate or value (second reference value) or more that is greater than the first reference value, the increasing value may be decreased.

If the charging efficiency 33 has a decreasing tendency (step #4: Yes in FIG. 3), the threshold setting unit 31 sets the product of the charging current 6 and the internal resistance 5 at this time to the threshold 8 (step #6 in FIG. 3). Thus, a state in which the charging efficiency 33 worsens beyond the allowable range due to an overvoltage can be set as the threshold 8 corresponding to a decrease (degradation) of battery performance of the secondary battery 1, and the degradation of the secondary battery 1 can be determined easily and accurately.

### [Other Embodiments]

(1) In the above embodiment, the suppression control is not limited to the configuration in which it is performed based on the threshold 8, and may also be performed while considering a capacity retention rate 35 of the secondary battery 1. For example, the overvoltage allowed for the secondary battery 1 depends on the capacity of the secondary battery 1. Thus, the overvoltage allowed for the secondary battery 1 changes in proportion to the capacity degradation of the secondary battery 1. Accordingly, the control unit 18 controls (performs the suppression control on) the power source 3 such that the value of the product (IR) of the charging current 6 and the internal resistance 5 is smaller than or equal to the product of the threshold 8 and the capacity retention rate 35.

The charging control apparatus includes a capacity retention rate acquisition unit 36 to acquire the capacity retention rate 35. Further, the charge capacity of the secondary battery 1 in an unused state is stored in advance in the storage unit 19 as an initial full charge capacity 38. The capacity retention rate acquisition unit 36 acquires a full charge capacity 39 of the secondary battery 1, and obtains the capacity retention rate 35 by dividing the full charge capacity 39 by initial full charge capacity 38. Note that the capacity retention rate acquisition unit 36 may acquire a separately obtained capacity retention rate 35 from the outside via the communication unit 15.

With this configuration, the threshold 8 is corrected based on the capacity retention rate 35 corresponding to the degradation of the secondary battery 1, and the suppression control is performed based on the corrected threshold 8, so that the degradation of battery performance during charging can be suppressed more accurately.

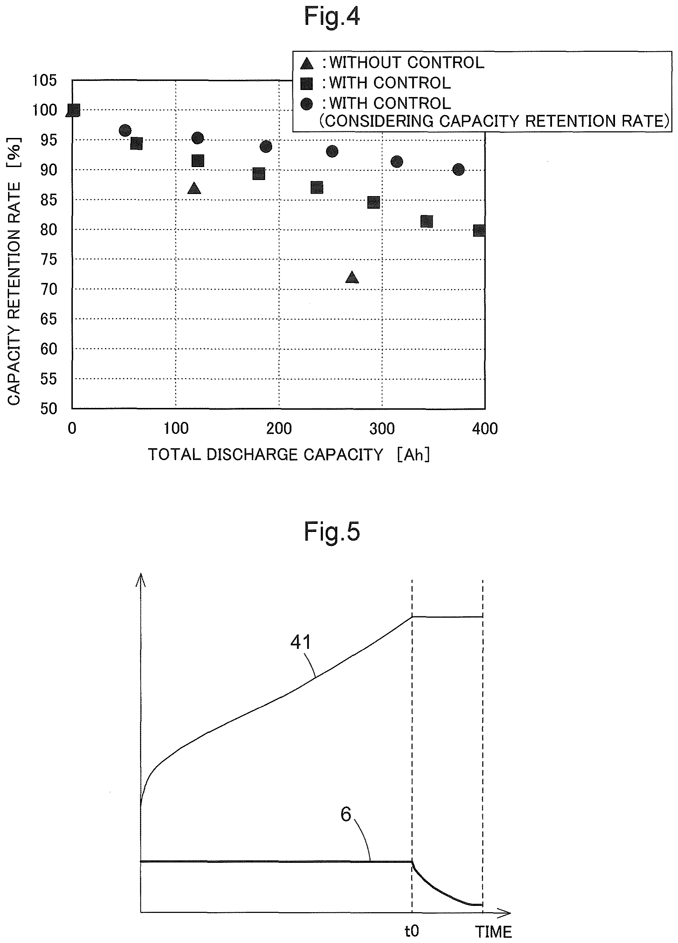

The effect of the suppression control will now be described with reference to FIGS. 2 and 4. FIG. 4 shows experimental data indicating the degree of degradation of the secondary battery 1 in the case where charging and discharging are repeated.

In FIG. 4, the horizontal axis indicates the total discharge capacity, which corresponds to the number of charging/discharging cycles (the amount of use of the secondary battery 1). The vertical axis indicates the capacity retention rate 35 of the secondary battery 1. Triangular plots indicate data for charging without the suppression control, square plots indicate data for charging with the suppression control, and circle plots indicate data for charging with the suppression control with consideration given to the capacity retention rate 35.

As can be understood from FIG. 4, the capacity retention rate 35 decreases from an early stage and decreases significantly if the suppression control is not performed. In contrast, the decrease in the capacity retention rate 35, i.e., the degradation of the secondary battery 1 is suppressed by performing the suppression control. Furthermore, it can also be understood that the degradation of the secondary battery 1 is further suppressed by performing the suppression control while considering the capacity retention rate 35.

(2) In the above embodiments, the internal resistance 5 changes with temperature, so that the resistance acquisition unit 17 may also correct the obtained (acquired) internal resistance 5 for temperature. Specifically, the resistance acquisition unit 17 prepares in advance a table or the like indicating the relationship between the charging temperature 28 and a temperature change coefficient of the internal resistance 5, acquires a coefficient from the table based on the charging temperature 28, and corrects the internal resistance 5 using the acquired coefficient.

Further, a table in which the relationship between the charging temperature 28 and the internal resistance 5 is experimentally obtained in advance may be prepared, and the resistance acquisition unit 17 may obtain the internal resistance 5 from the table based on the charging temperature 28.

The internal resistance 5 can be obtained more accurately by thus obtaining the internal resistance 5 while considering the charging temperature 28, and the degradation of battery performance during charging can be suppressed more accurately.

(3) In the above embodiments, the suppression control may be performed all the time while the secondary battery 1 is charged, but the suppression control may alternatively be performed only for a predetermined period during charging, e.g., only in the latter half of the charging. Specifically, when the charging voltage 41 or the charge capacity exceeds a predetermined value (upper limit voltage or upper limit capacity) during charging, the control unit 18 performs the suppression control to control at least either the charging current 6 or the internal resistance 5 such that the product (IR) of the charging current 6 and the internal resistance 5 does not exceed the threshold 8 (or the product of the threshold 8 and the capacity retention rate 35). In this case, the charging voltage 41 is measured by the measurement unit 12 (corresponding to a voltage measurement unit) and stored in the storage unit 19 via the communication unit 15. Further, when the charging voltage 41 or the charge capacity is within one or more predetermined ranges, the control unit 18 may perform the suppression control based on the threshold 8 determined for each range. For example, a plurality of charging voltage bands 42 are determined according to the value of the charging voltage 41, and a unique threshold 8 is set for each charging voltage band 42. In response to the charging voltage 41 reaching a voltage corresponding to a certain charging voltage band 42, the control unit 18 performs the suppression control using the threshold 8 corresponding to this charging voltage band 42.

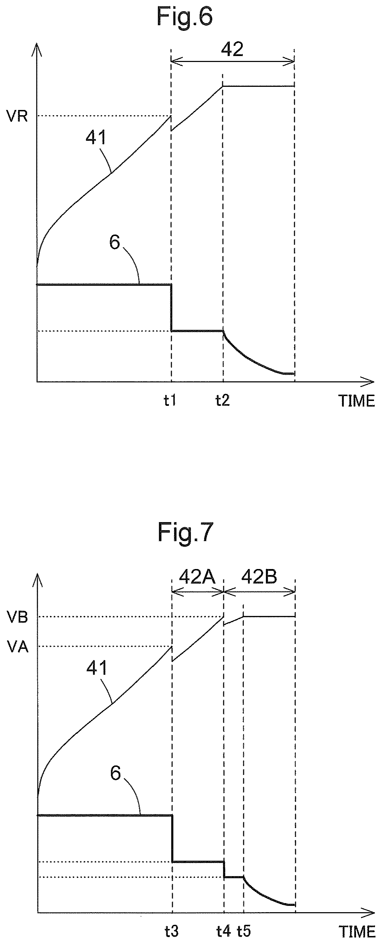

While the battery is charged with a constant charging current 6, the charging voltage 41 increases as the battery is charged, as shown in FIG. 5. In the example shown in FIG. 5, the suppression control is performed from the initial stage of charging using the method of suppressing the charging current 6. In this case, CC (Constant Current) charging is performed at the beginning of charging. Upon the charging voltage 41 reaching an upper limit charging voltage of the secondary battery 1 at time t0, the charging method shifts to CV (Constant Voltage) charging, and then charging ends.
A configuration is also possible that CV charging is not performed, and charging ends after the upper limit charging voltage is reached. Here, FIG. 5 and the later-described FIGS. 6 and 7 show changes in the charging current 6 and the charging voltage 41 during a charge period.
In FIGS. 5 to 7, the horizontal axis indicates the elapsed time of charging, and the vertical axis indicates the charging current 6 and the charging voltage 41. In the examples shown in FIGS. 6 and 7 as well, similar to the example shown in FIG. 5, CC charging may be performed at the beginning of charging, and the charging method may shift to CV charging after the charging voltage 41 reaches the upper limit charging voltage, or only CC charging may be performed.

As shown in FIG. 6, the control unit 18 can set a range for performing the suppression control with a switching voltage VR of the charging voltage 41. That is, the control unit 18 performs the suppression control in a range (charging voltage band 42) in which the charging voltage 41 is higher than or equal to the switching voltage VR during charging. Here, the switching voltage VR is an upper limit charging voltage or a voltage smaller than the upper limit charging voltage by a predetermined margin.

In FIG. 6, the charging voltage 41 exceeds the switching voltage VR at time t1. Thus, the charging voltage band 42 is entered after the time t1, and the control unit 18 performs the suppression control in the method of suppressing the charging current 6 using the threshold 8 in which the switching voltage VR is considered, in this charging voltage band 42. Upon the charging voltage 41 reaching the upper limit charging voltage at time t2 in the charging voltage band 42, the charging method shifts to CV charging. Upon IR exceeding the threshold 8, the suppression control is performed using the method of suppressing the charging current 6.

The plurality of charging voltage bands 42 are set by a plurality of switching voltages VR. In FIG. 7, the charging voltage 41 exceeds a switching voltage VA at time t3. Thus, a charging voltage band 42A is entered after the time t3, and the control unit 18 performs the suppression control in the method of suppressing the charging current 6 using a predetermined threshold 8A in this charging voltage band 42A. Further, at time t4, the charging voltage 41 exceeds a switching voltage VB. Thus, a charging voltage band 42B is entered after the time t4, and the control unit 18 performs the suppression control in the method of suppressing the charging current 6 using a threshold 8B different from the threshold 8A in this charging voltage band 42B. In this case as well, upon the charging voltage 41 exceeding the upper limit charging voltage (time t5), the charging method shifts to CV charging. Upon IR exceeding the threshold 8, the suppression control is performed using the method of suppressing the charging current 6. Note that the thresholds 8A and 8B have different margins with respect to the upper limit charging voltage.

(4) In the above embodiments, the charging control apparatus is not limited to being constituted by functional blocks such as those shown in FIG. 1, but may also be constituted by any functional blocks. For example, each functional block of the charging control apparatus may be further subdivided, or conversely, some or all of the functional blocks may be integrated. The functions of the charging control apparatus are not limited to the above-described functional blocks, but may also be implemented by a method executed by any functional block. Also, some or all of the functions of the charging control apparatus may be constituted by software. A program associated with the software is stored in any storage device such as the storage unit 19, and executed by a processor (computer) such as a CPU included in the charging control apparatus, or a separately provided processor (computer). For example, some or all of the processing of the program may be performed by a processor mounted on a device provided separately from the charging control apparatus, such as a server.

Note that the configurations disclosed in the above embodiments (including other embodiments; the same applies below) can be applied in combination with configurations disclosed in other embodiments, as long as no contradiction arises. Furthermore, the embodiments disclosed herein are illustrative. The embodiments of the present invention are not limited thereto, and can be modified as appropriate within the scope that does not deviate from the purpose of the present invention.

### Industrial Applicability

The invention of the present application can be applied to a charging control apparatus that controls charging of a secondary battery.

### Description of Reference Signs

1: Secondary battery
3: Power source
5: Internal resistance
6: Charging current
8: Threshold
12: Measurement unit (Voltage measurement unit)
17: Resistance acquisition unit
18: Control unit
19: Storage unit
21: Battery information
26: Temperature control unit
35: Capacity retention rate
36: Capacity retention rate acquisition unit
38: Initial full charge capacity
41: Charging voltage
42: Charging voltage band

## Claims

1. A charging control apparatus configured to control charging of a secondary battery that is performed by supplying power from a power source, the charging control apparatus comprising:
a control unit configured to control the power supplied from the power source; and
a resistance acquisition unit configured to obtain an internal resistance of the secondary battery,
wherein the power source is capable of changing a charging current and supplying the power to the secondary battery, and
the control unit is configured to perform suppression control on the power source such that a product of the charging current and the internal resistance is smaller than or equal to a predetermined threshold.

2. The charging control apparatus according to claim 1, wherein the threshold is set while considering an allowable overvoltage during charging of the secondary battery.

3. The charging control apparatus according to claim 2,
wherein the secondary battery is repeatedly charged and discharged while experimentally varying the product of the charging current and the internal resistance, a decrease rate of a charging efficiency or of a full charge capacity is measured each time the secondary battery is charged and discharged, and the product of the charging current and the internal resistance at a time when the decrease rate of the charging efficiency or of the full charge capacity becomes smaller than a predetermined value is determined as the threshold.

4. The charging control apparatus according to claim 1, further comprising:
a temperature control unit configured to control a temperature of the secondary battery during charging,
wherein the control unit is configured to control the internal resistance by controlling the temperature of the secondary battery with use of the temperature control unit such that the product of the charging current and the internal resistance is smaller than or equal to the threshold in the suppression control.

5. The charging control apparatus according to claim 1, further comprising:
a storage unit configured to store an initial full charge capacity of the secondary battery; and
a capacity retention rate acquisition unit configured to obtain a capacity retention rate of the secondary battery from the initial full charge capacity,
wherein the control unit is configured to perform the suppression control such that the product of the charging current and the internal resistance is smaller than or equal to a product of the threshold and the capacity retention rate.

6. The charging control apparatus according to any one of claims 1 to 5, further comprising:
a voltage measurement unit configured to measure a charging voltage during charging,
wherein the control unit is configured to perform the suppression control while the charging voltage is higher than or equal to a predetermined upper limit voltage.

7. The charging control apparatus according to any one of claims 1 to 5, further comprising:
a voltage measurement unit configured to measure a charging voltage during charging,
wherein the threshold includes thresholds set to be different for each of a plurality of charging voltage bands, and
the control unit is configured to perform the suppression control for each of the charging voltage bands with use of the threshold corresponding thereto.

8. A charging control method for controlling charging of a secondary battery that is performed by supplying power from a power source, the charging control method comprising:
a step of obtaining an internal resistance of the secondary battery; and
a step of performing suppression control on the power source such that a product of a charging current of the power and the internal resistance is smaller than or equal to a predetermined threshold.

9. A charging control program for controlling charging of a secondary battery that is performed by supplying power from a power source, the charging control program causing a computer to execute:
a function of obtaining an internal resistance of the secondary battery; and
a function of performing suppression control on the power source such that a product of a charging current of the power and the internal resistance is smaller than or equal to a predetermined threshold.
